# EUROPÄISCHE PATENTSCHRIFT

(11) **EP 3 777 517 B1**
(45) Veröffentlichungstag und Bekanntmachung des Hinweises auf die Patenterteilung: **31.08.2022**
(21) Anmeldenummer: 20189102.5
(22) Anmeldetag: 03.08.2020
(51) Int. Cl.: A01G 9/02, A47G 7/08

(54) **BEPFLANZUNGSBEHÄLTER UND BEPFLANZUNGSBEHÄLTERSYSTEM ZUR BEPFLANZUNG VON BALKONEN ODER TERRASSEN**
PLANTING CONTAINER AND PLANTING CONTAINER SYSTEM FOR PLANTING ON BALCONIES OR TERRACES
RÉCIPIENT À PLANTATION ET SYSTÈME DE RÉCIPIENT À PLANTATION DESTINÉS À LA PLANTATION DE BALCONS OU DE TERRASSES

(30) Priorität: 12.08.2019 CH 10062019
(43) Veröffentlichungstag der Anmeldung: 17.02.2021
(73) Patentinhaber: Güpfert, Samuel, 9500 Wil (CH)
(72) Erfinder: Güpfert, Samuel, 9500 Wil (CH)
(74) Vertreter: Hepp Wenger Ryffel AG

(56) Entgegenhaltungen:
- EP-A1- 0 494 822
- EP-A1- 3 229 582
- WO-A1-2016/087687
- DE-A1- 3 433 167
- DE-U1- 9 309 862
- DE-U1- 9 420 732
- FR-A1- 2 877 541
- KR-A- 19980 043 657
- US-A- 986 395
- US-A1- 2007 157 514
- US-A1- 2018 139 910

## Beschreibung

Die Erfindung betrifft einen Bepflanzungsbehälter und ein Bepflanzungsbehältersystem zur Bepflanzung von Balkonen, Terrassen, Gärten oder befestigten Plätzen.

Bepflanzungsbehälter sind Behälter zur Aufnahme von Kultursubstrat, meistens Blumenerde, in das Pflanzen eingepflanzt werden können. Bepflanzungsbehälter sind beispielsweise Blumentöpfe oder -kisten. Sie dienen dem Dekorieren durch Blumen oder auch Anpflanzen von Nutzpflanzen wie Kräutern oder Gehölzen. Üblicherweise sind solche Bepflanzungsbehälter einstückig hergestellt und lassen sich nicht mit anderen Bepflanzungsbehältern kombinieren und so zu einem grösseren Bepflanzungsbehälter zusammenzubauen.

Aus der EP0494822 A1 ist ein Pflanzenbehälter mit Wasservorrat zur Verwendung in der Stadt bekannt.

Aus DE202005011061U1 ist ein Bausatz für Bepflanzungsbehälter bekannt. Der Bausatz umfasst einen Aufsatzrahmen, der beispielsweise auf Mülltonnenhäuschen angeordnet werden kann. Dabei werden Seitenwände mit dem Untergrund verschraubt. Der Bausatz hat den Nachteil, dass er nicht flexibel einsetzbar und nicht sehr stabil ist und sich auch nicht einfach mit anderen Bepflanzungsbehältern kombinieren lässt.

Aufgabe der Erfindung ist es daher, diese und weitere Nachteile des Standes der Technik zu beheben und stabile, flexible und einfach kombinierbare Bepflanzungsbehälter und ein stabiles, flexibles und einfach herzustellendes Bepflanzungsbehältersystem bereitzustellen. Die Bepflanzungsbehälter und das Bepflanzungsbehältersystem sollen zudem einen geringen Herstellungs- und Montageaufwand aufweisen.

Diese Aufgaben werden durch ein Bepflanzungsbehälter und ein Bepflanzungsbehältersystem zur Bepflanzung von Balkonen oder Terrassen gelöst.

Insbesondere wird die Aufgabe durch einen Bepflanzungsbehälter zur Bepflanzung von Balkonen, Terrassen, Gärten oder befestigten Plätzen gelöst. Der Bepflanzungsbehälter umfasst mindestens eine Innenwanne mit einem Boden und mindestens vier Seitenwänden. Alle Seitenwände der Innenwanne umfassen Befestigungselemente zur Befestigung von Rahmenelementen oder Seitenwänden anderer Innenwannen. Der Bepflanzungsbehälter umfasst mindestens ein, insbesondere drei, bevorzugt vier, Rahmenelemente zum Abschluss des Bepflanzungsbehälters an der Aussenseite. Die Befestigungselemente umfassen Löcher in den Seitenwänden zur Befestigung des mindestens einen Rahmenelements.

Ein solcher Bepflanzungsbehälter ist einfach mit anderen kombinierbar. Durch die Rahmenelemente wird der Bepflanzungsbehälter stabiler. Das oder die Rahmenelemente können aus Holz, Kunststoff, wie Polypropylen, Polykarbonat oder HD-Polyethylen, oder Metallen wie Kupfer, Aluminium oder Stahl sein. Die Oberfläche kann eine Beschichtung aufweisen, wie eine Pulverbeschichtung oder eine Lackierung, verzinkt oder auf sonstige Weise behandelt sein.

Vorzugsweise umfasst die Innenwanne mindestens einen Wasserauslass. Der Wasserauslass ist 10-70 mm über dem Boden angeordnet. Dadurch kann ein grosser Wasserstau innerhalb der Innenwanne einfach verhindert werden.

Erfindungsgemäß ist am Bepflanzungsbehälter mindestens ein Verstärkungselement angeordnet.

Dadurch wird der Bepflanzungsbehälter stabiler, so dass grössere Bepflanzungsbehälter möglich sind.

Erfindungsgemäß umfasst die Innenwanne eine dem Boden gegenüberliegende, offene Oberseite. Das Verstärkungselement ist in der Innenwanne angeordnet, bevorzugt 0-20 mm unterhalb der Oberseite der Innenwanne.

So kann die Stabilisierung einfach optimiert werden. Vorzugsweise ist das mindestens eine Verstärkungselement als ein Winkelelement ausgebildet.

Anstelle eines Winkelelements können andere Arten von Verstärkungselementen verwendet werden.

Vorzugsweise umfasst der Bepflanzungsbehälter eine Breite von im Wesentlichen 1000mm, eine Höhe von im Wesentlichen 250mm und insbesondere eine Länge von im Wesentlichen 2000 mm.

Diese Dimensionen sind besonders geeignet für Balkone und Terrassen, da sie viel Platz für Bepflanzung bieten und dennoch wenig Platz verbrauchen. Die Bepflanzungsbehälter können zwischen 500-1500mm breit, zwischen 500-3000mm lang und zwischen 250-1500mm hoch sein.

Vorzugsweise umfasst der Bepflanzungsbehälter einen Aufsatz. Der Aufsatz ist zumindest teilweise oberhalb der Innenwanne angeordnet.

Durch einen solchen Aufsatz kann das Fassungsvermögen eines Bepflanzungsbehälters für Kultursubstrat einfach erhöht werden. Der Aufsatz kann einen Boden umfassen. Der Aufsatz kann Befestigungselemente zum Verbinden mit dem Bepflanzungsbehälter aufweisen. Der Aufsatz kann zwischen 100-750 mm hoch sein. Vorzugsweise weist der Aufsatz eine runde oder eckige Grundfläche auf.

Ein eckiger Aufsatz lässt sich leicht mit einem eckigen Bepflanzungsbehälter verbinden. Ein runder Aufsatz weist eine hohe Stabilität auf.

Die Aufgabe wird weiter durch ein Bepflanzungsbehältersystem zur Bepflanzung von Balkonen, Terrassen, Gärten oder befestigten Plätzen gelöst. Das Bepflanzungsbehältersystem umfasst mindestens zwei Bepflanzungsbehälter wie vorhergehend beschrieben. Jeder Bepflanzungsbehälter umfasst eine Innenwanne mit je einem Boden und mindestens vier Seitenwänden. Alle Seitenwände der Innenwannen umfassen Befestigungselemente zur Befestigung von Rahmenelementen des Bepflanzungsbehälters oder Seitenwänden von anderen Innenwannen. Eine Seitenwand einer ersten Innenwanne des ersten Bepflanzungsbehälters ist an einer Seitenwand einer zweiten Innenwanne eines zweiten Bepflanzungsbehälters befestigt und/oder befestigbar. Jeweils ein Rahmenelement ist über die gesamte Länge oder Breite des Bepflanzungsbehätersystems angeordnet und/oder anordenbar. Das Bepflanzungsbehältersystem umfasst insbesondere mindestens vier, bevorzugt sechs, Rahmenelemente.

Ein solches Bepflanzungsbehältersystem erlaubt eine einfache Kombination von Bepflanzungsbehältern. Die Bepflanzungsbehälter können an einer Längsseite oder an einer Breitseite befestigt und/oder befestigbar sein. Das Bepflanzungsbehältersystem kann drei Bepflanzungsbehälter umfassen, wobei zwei Bepflanzungsbehälter die gleiche Grösse umfassen können. Ein erster und ein zweiter Bepflanzungsbehälter können so an einem dritten Bepflanzungsbehälter angeordnet und/oder anordenbar sein, dass eine ersten Seitenwand einer ersten Innenwanne des ersten Bepflanzungsbehälters an einer zweiten Seitenwand einer zweiten Innenwanne des zweiten Bepflanzungsbehälter

Vorzugsweise sind mindestens eine erste Seitenwand der ersten Innenwanne und eine zweite Seitenwand der zweiten Innenwanne mit dem gleichen Rahmenelement verbunden und/oder verbindbar, wobei dieses Rahmenelement insbesondere eine Länge umfasst, die mindestens so lang ist, wie eine erste Länge der ersten Seitenwand und eine zweite Länge der zweiten Seitenwand zusammen.

Das erlaubt eine stabile Verbindung der Innenwannen und eine optimierte Ausgestaltung. Die Herstellung und Montage des Bepflanzungssystems ist einfach, da auf ein zweites Rahmenelement an dieser Seite verzichtet werden kann. Jede Seite des Bepflanzungsbehältersystems kann über die gesamte Länge oder Breite ein einzelnes Rahmenelement umfassen, welches mit den Seitenwänden der entsprechenden Innenwanne verbunden und/oder verbindbar ist.

Die Erfindung wird anhand nachfolgender Figuren beispielhaft erklärt. Es zeigt
Figur 1: Ein Bepflanzungsbehälter in perspektivischer Ansicht;
Figur 2: Ein Ausschnitt aus der Darstellung von Figur 1;
Figur 3: Eine Seitenwand einer Innenwanne in Seitenansicht;
Figur 4: Eine weitere Seitenwand einer Innenwanne in Seitenansicht;
Figur 5: Eine Draufsicht auf ein Bepflanzungsbehältersystem;
Figur 6: Eine Seitenansicht eines Bepflanzungsbehältersystems.

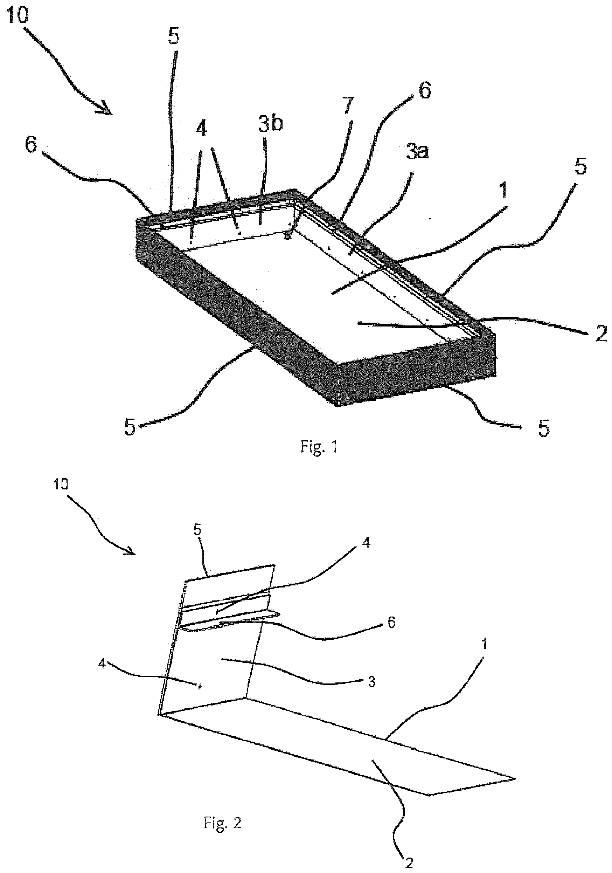

Figur 1 offenbart einen Bepflanzungsbehälter 10 mit einer Innenwanne 1. Die Innenwanne 1 umfasst einen Boden 2 und zwei Seitenwände 3a und zwei Seitenwände 3b (hier jeweils eine zu sehen). Der Boden 2 umfasst bei dieser Ausführungsform eine rechteckige Grundfläche. Die Seitenwände 3 sind 250mm hoch und umfassen jeweils mehrere Befestigungselemente 4. An jeder Seitenwand 3 ist ein Rahmenelement 5 angeordnet, das den Bepflanzungsbehälter 10 abschliesst. Am Boden 2 ist weiter ein Wasserauslass 7 angeordnet. Der Wasserauslass 7 ist 20mm über dem Boden 2 angeordnet. In anderen Ausführungsformen kann der Wasserauslass 7 bis zu 70 mm über dem Boden 2 angeordnet sein.

An jeder Seitenwand 3a und 3b ist jeweils ein Verstärkungselement 6 angeordnet.

Figur 2 offenbart einen Ausschnitt aus der Darstellung von Figur 1. Zu sehen ist die Innenwanne 1 mit einem Ausschnitt des Bodens 2 und einem Ausschnitt aus einer Seitenwand 3. An der Seitenwand 3 sind Befestigungselemente 4, hier Löcher, angeordnet. Die Befestigungselemente 4 dienen der Befestigung des Rahmenelements 5 und des Verstärkungselements 6, hier ein Winkelelement.

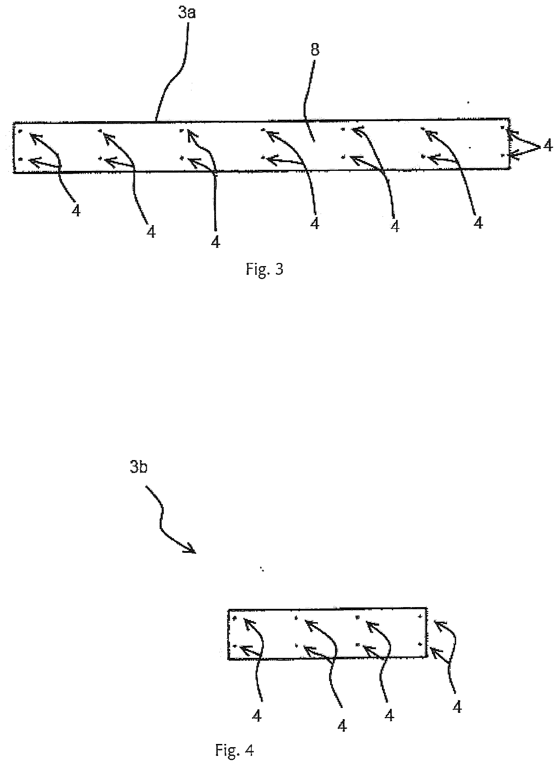

Figur 3 offenbart eine Seitenansicht der ersten Seitenwand 3a mit einer Länge von 2000 mm und einer Höhe von 250mm. Die Seitenwand 3a umfasst vierzehn Befestigungselemente 4. Die Befestigungselemente 4 sind paarweise über die Längsseite der Seitenwand 3a verteilt. Ein erstes Befestigungselement 4 ist zum zweiten Befestigungselement 4 des gleichen Paares in einem Abstand angeordnet. Zwischen einem ersten Paar und einem zweiten Paar von Befestigungselementen 4 ist jeweils ein Abstand angeordnet. Somit sind die Befestigungselemente 4 gleichmässig über die Seitenwandfläche 8 verteilt.

Figur 4 zeigt eine Seitenansicht der zweiten Seitenwand 3b. Die Seitenwand 3b umfasst eine Länge von 1000mm und eine Höhe von 250 mm und acht Befestigungselemente 4, welche auch hier paarweise über die Längsseite der Seitenwand 3b verteilt sind. Zwischen den Paaren von Befestigungselementen 4 ist auch hier ein Abstand angeordnet.

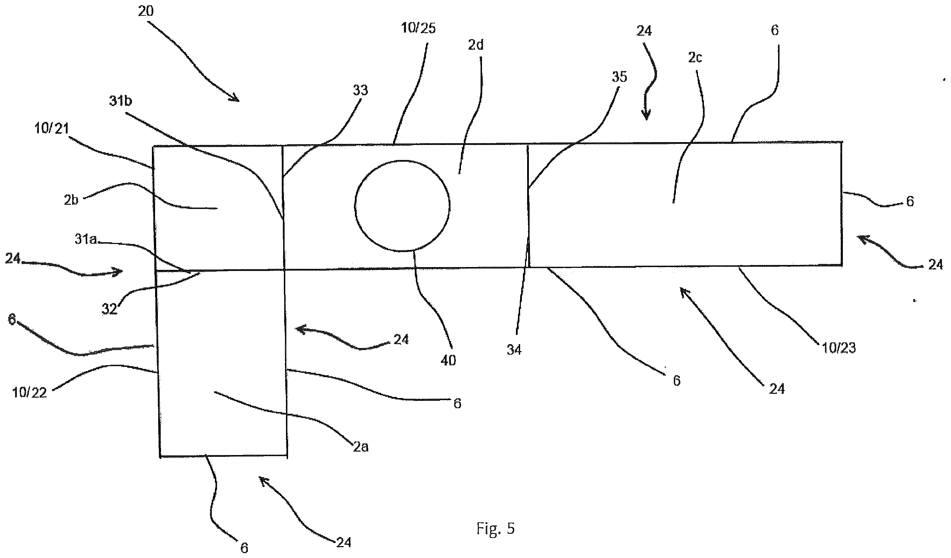

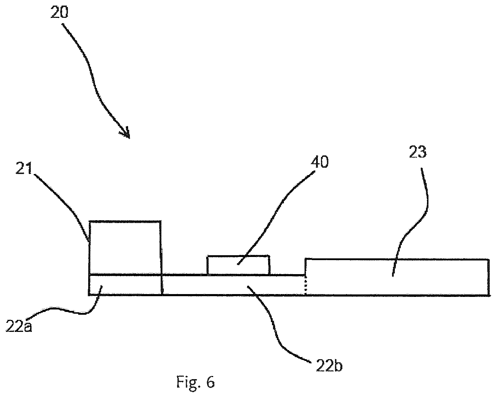

Figur 5 offenbart eine Draufsicht auf ein Bepflanzungsbehältersystem 20. Das Bepflanzungsbehältersystem 20 umfasst vier Bepflanzungsbehälter 10 in vier verschiedenen Ausführungsformen. Die Ausführungsformen der Bepflanzungsbehälter 10 unterscheiden sich in den Dimensionen des Bodens 2 und der Höhe (vgl. auch Figur 6).

Die erste Ausführungsform entspricht im Wesentlichen der in den Figuren 1-4 gezeigten Ausführungsform. Der Bepflanzungsbehälter 10 in dieser Ausführungsform wird im Folgenden als Grundbehälter 22 bezeichnet. Der Boden 2a des Grundbehälters 22 umfasst eine rechteckige Grundfläche mit einer Länge von 2000mm und einer Breite von 1000mm.

Die zweite Ausführungsform des Bepflanzungsbehälters 10 wird im Folgenden als Kubikbehälter 21 bezeichnet. Der Kubikbehälter 21 umfasst einen quadratischen Boden 2b hier mit einer Seitenlänge von 1000mm.

Die dritte Ausführungsform des Bepflanzungsbehälters 10 wird im Folgenden als Tragbehälter 25 bezeichnet. Der Boden 2c des Tragbehälters 25 umfasst eine rechteckige Grundfläche mit einer Länge von 1500mm und einer Breite von 1000mm.

Die vierte Ausführungsform des Bepflanzungsbehälters 10 wird im Folgenden als Langbehälter 23 bezeichnet. Der Boden 2d des Langbehälters 23 umfasst eine rechteckige Grundfläche mit einer Länge von 2500mm und einer Breite von 1000mmm.

Das gezeigte Bepflanzungsbehältersystem 20 umfasst jeweils einen Bepflanzungsbehälter 10 jeder der genannten Ausführungsformen, also einen Grundbehälter 22, einen Kubikbehälter 21, einen Tragbehälter 25 und einen Langbehälter 23. Diese Bepflanzungsbehälter 10 sind so miteinander verbunden, dass sie von Oben betrachtet im Wesentlichen eine Winkelform mit einem rechten Winkel bilden. Dabei ist der Kubikbehälter 21 in der Ecke des Winkels angeordnet und ein Schenkel der Winkelform ist kürzer als der andere.

Eine erste Seitenwand 31a des Kubikbehälters 21 ist mit einer Seitenwand 32 des Grundbehälters 22 verbunden. Der Grundbehälter 22 bildet den kurzen Schenkel der Winkelform.

Eine zweite, an der ersten Seitenwand 31a anschliessende Seitenwand 31b des Kubikbehälters 21 ist mit einer ersten Seitenwand 33 des Tragbehälters 25 verbunden. Der Tragbehälter 25 umfasst weiter eine der ersten Seitenwand 33 gegenüberliegende zweite Seitenwand 34. Diese ist mit einer Seitenwand 35 des Langbehälters 23 verbunden. Gemeinsam bilden der Tragbehälter 25 und der Langbehälter 23 den langen Schenkel der Winkelform.

Der Tragbehälter 25 trägt einen runder Aufsatz 40. Der Aufsatz 40 umfasst einen Durchmesser von 500mm und eine Höhe von 100 mm. In anderen Ausführungsformen (hier nicht gezeigt) kann der Aufsatz 40 einen Durchmesser bis zu 2000mm und eine Höhe bis zu 750 mm umfassen.

Das Bepflanzungssystem 20 umfasst insgesamt sechs Seiten 24 und sechs Rahmenelemente 5. Über die gesamte Länge jeder Seite 24 des Bepflanzungssystems 20 ist jeweils ein Rahmenelement 5 angeordnet. Beispielsweise ist hier über die gesamte vom Kubikbehälter 21, des Tragbehälters 25 und des Langbehälters 23 kombiniert ein einzelnes Rahmenelement 5 angeordnet. So wird das Bepflanzungsbehältersystem 20 einheitlich wie ein einzelner Bepflanzungsbehälter 10 abgeschlossen und die Verbindung ist stabil.

Figur 6 offenbart eine Seitenansicht des Bepflanzungsbehältersystems 20. Zu sehen ist, dass der erste Bepflanzungsbehälter 21 höher ist, als der zweite und dritte Bepflanzungsbehälter 22a und 22b und als der vierte Bepflanzungsbehälter 23. Der vierte Bepflanzungsbehälter 23 ist höher als der zweite und dritte Bepflanzungsbehälter 22a und 22b.

Der erste Bepflanzungsbehälter 21 ist 1000mm hoch. Der vierte Bepflanzungsbehälter 23 ist 500mm hoch. Der zweite und der dritte Bepflanzungsbehälter 22, 25 sind beide 250mm hoch.

## Patentansprüche

1. Bepflanzungsbehälter (10) zur Bepflanzung von Balkonen, Terrassen, Gärten oder befestigten Plätzen, umfassend mindestens eine Innenwanne (1) mit einem Boden (2) und mindestens vier Seitenwänden (3a, 3b)wobei alle Seitenwände (3a, 3b) der Innenwanne (1) Befestigungselemente (4) zur Befestigung von Rahmenelementen (5) oder Seitenwänden (31-35) anderer Innenwannen (1) umfasst, wobei der Bepflanzungsbehälter (10) mindestens ein, insbesondere drei, bevorzugt vier, Rahmenelemente (5) zum Abschluss des Bepflanzungsbehälters (10) an der Aussenseite umfasst wobei die Befestigungselemente (4) Löcher in den Seitenwänden zur Befestigung des mindestens einen Rahmenelements (5) umfassen, wobei die Innenwanne (1) eine dem Boden (2) gegenüberliegende, offene Oberseite umfasst, **dadurch gekennzeichnet, dass** am Bepflanzungsbehälter (10) mindestens ein Verstärkungselement (6) angeordnet ist, wobei das Verstärkungselement (6) in der Innenwanne (1) angeordnet ist, bevorzugt 0-20 mm unterhalb der Oberseite der Innenwanne (1).

2. Bepflanzungsbehälter (10) nach Anspruch 1, **dadurch gekennzeichnet, dass** die Innenwanne (1) mindestens einen Wasserauslass (7) umfasst, wobei der Wasserauslass (7) 10-20mm über dem Boden (2) angeordnet ist.

3. Bepflanzungsbehälter (10) nach einem der Ansprüche 1 oder 2, **dadurch gekennzeichnet, dass** das mindestens eine Verstärkungselement (6) als ein Winkelelement ausgebildet ist.

4. Bepflanzungsbehälter (10) nach einem der vorhergehenden Ansprüche, **dadurch gekennzeichnet, dass** der Bepflanzungsbehälter (10) eine Breite von im Wesentlichen 1000mm, eine Höhe von im Wesentlichen 250mm und insbesondere eine Länge von im Wesentlichen 2000 mm umfasst.

5. Bepflanzungsbehälter (10) nach einem der vorhergehenden Ansprüche, **dadurch gekennzeichnet, dass** der Bepflanzungsbehälter (10) einen Aufsatz (40) umfasst, wobei der Aufsatz (40) zumindest teilweise oberhalb der Innenwanne (1) angeordnet ist.

6. Bepflanzungsbehälter (10) nach Anspruch 4, **dadurch gekennzeichnet, dass** der Aufsatz (40) eine runde oder eckige Grundfläche aufweist.

7. Bepflanzungsbehältersystem (20) zur Bepflanzung von Balkonen, Terrassen, Gärten oder befestigten Plätzen, umfassend mindestens zwei Bepflanzungsbehälter (21, 22, 23, 25) nach einem der vorhergehenden Ansprüche, wobei jeder Bepflanzungsbehälter (21, 22, 23, 25) eine Innenwanne (1) mit je einem Boden (2a-2d) und mindestens vier Seitenwänden (31-34) umfasst, **dadurch gekennzeichnet, dass** alle Seitenwände (31-34) der Innenwannen (1) Befestigungselemente (4) zur Befestigung von Rahmenelementen (5) des Bepflanzungsbehälters (21, 22, 23, 25) oder Seitenwänden (31-34) von anderen Innenwannen (1) umfasst, wobei eine Seitenwand (31-34) einer ersten Innenwanne (1) des ersten Bepflanzungsbehälters (21, 22, 23, 25) an einer Seitenwand (31-34) einer zweiten Innenwanne (1) eines zweiten Bepflanzungsbehälters (21, 22, 23, 25) befestigt und/oder befestigbar ist, wobei jeweils ein Rahmenelement (5) über die gesamte Länge oder Breite des Bepflanzungsbehältersystems (20) angeordnet und/oder anordenbar ist, wobei das Bepflanzungsbehältersystem (20) insbesondere mindestens vier, bevorzugt sechs, Rahmenelemente (5) umfasst.

8. Bepflanzungsbehältersystem (20) nach Anspruch 7, **dadurch gekennzeichnet, dass** mindestens eine erste Seitenwand (31-34) der ersten Innenwanne (1) und eine zweite Seitenwand (31-34) der zweiten Innenwanne (1) mit dem gleichen Rahmenelement (5) verbunden und/oder verbindbar sind, wobei dieses Rahmenelement (5) insbesondere eine Länge umfasst, die mindestens so lang ist, wie eine erste Länge der ersten Seitenwand (31-34) und eine zweite Länge der zweiten Seitenwand (31-34) zusammen.

## Claims

1. Planting container (10) for planting balconies, terraces, gardens or paved areas, comprising at least one interior tray (1) with a bottom (2) and at least four side walls (3a, 3b), wherein all side walls (3a, 3b) of the interior tray (1) comprise fastening elements (4) for fastening frame elements (5) or side walls (31-35) of other interior trays (1), wherein the planting container (10) comprises at least one, in particular three or four, frame elements (5) for limiting the planting container (10) on the outside, wherein the fastening elements (4) comprise holes in the side walls for fastening the at least one frame element (5), wherein the interior tray (1) comprises an open top side opposite the bottom (2), **characterized in that** at least one reinforcing element (6) is arranged at the Planting container (10), said reinforcing element (6) being arranged in the interior tray (1), preferably 0-20 mm below the top side of the interior tray (1).

2. Planting container (10) according to claim 1, **characterized in that** the interior tray (1) comprises at least one water outlet (7), wherein the water outlet (7) is arranged 10 - 20 mm above the bottom (2).

3. Planting container (10) according to one of the claims 1 or 2, **characterized in that** the at least one reinforcing element (6) is formed as an angle element.

4. Planting container (10) according to one of the preceding claims, **characterized in that** the planting container (10) comprises a width of substantially 1000 mm, a height of substantially 250 mm and, in particular, a length of substantially 2000 mm.

5. Planting container (10) according to one of the preceding claims, **characterized in that** the planting container (10) comprises a top (40), the top (40) being arranged at least partially above the interior tray (1).

6. Planting container (10) according to claim 4, **characterized in that** the top (40) has a round or angular base.

7. Planting container system (20) for planting balconies, terraces, gardens or paved places, comprising at least two planting containers (21, 22, 23, 25) according to any of the preceding claims, wherein each planting container (21, 22, 23, 25) comprises an interior tray (1) each having a bottom (2a-2d) and at least four side walls (31-34), **characterized in that** all side walls (31-34) of the interior trays (1) comprise fastening elements (4) for fastening frame elements (5) of the planting container (21, 22, 23, 25) or side walls (31-34) of other interior trays (1), wherein a side wall (31-34) of a first interior tray (1) of the first planting container (21, 22, 23, 25) is fastened and/or fastenable to a side wall (31-34) of a second interior tray (1) of a second planting container (21, 22, 23, 25), wherein one frame element (5) is arranged and/or can be arranged over the entire length or width of the planting container system (20), wherein the planting container system (20) comprises in particular at least four, preferably six, frame elements (5).

8. Planting container system (20) according to claim 7, **characterized in that** at least a first side wall (31-34) of the first interior tray (1) and a second side wall (31-34) of the second interior tray (1) are connected and/or connectable to the same frame element (5), said frame element (5) in particular comprising a length which is at least as long as a first length of the first side wall (31-34) and a second length of the second side wall (31-34) together.

## Revendications

1. Récipient de plantation (10) pour la plantation de balcons, terrasses, jardins ou places consolidées, comprenant au moins un bac intérieur (1) avec un fond (2) et au moins quatre parois latérales (3a, 3b), toutes les parois latérales (3a, 3b) du bac intérieur (1) comprenant des éléments de fixation (4) pour la fixation d'éléments de cadre (5) ou de parois latérales (31-35) d'autres bacs intérieurs (1), le récipient de plantation (10) comprenant au moins un, en particulier trois, de préférence quatre éléments de cadre (5) pour la fermeture du récipient de plantation (10) sur le côté extérieur, les éléments de fixation (4) comprenant des trous dans les parois latérales pour la fixation d'au moins un élément de cadre (5), le bac intérieur (1) présentant une face supérieure ouverte opposée au fond (2), **caractérisé en ce qu'**au moins un élément de renforcement (6) est disposé sur le récipient de plantation (10), l'élément de renforcement (6) étant disposé dans le bac intérieur (1), de préférence 0-20 mm en dessous de la face supérieure du bac intérieur (1).

2. Récipient de plantation (10) selon la revendication 1, **caractérisé en ce que** le bac intérieur (1) comprend au moins une sortie d'eau (7), la sortie d'eau (7) étant située entre 10 et 20 mm au-dessus du fond (2).

3. Récipient de plantation (10) selon l'une quelconque des revendications 1 ou 2, **caractérisé en ce que** ledit au moins un élément de renforcement (6) est réalisé sous la forme d'un élément angulaire.

4. Récipient de plantation (10) selon l'une quelconque des revendications précédentes, **caractérisé en ce que** le récipient de plantation (10) comprend une largeur sensiblement égale à 1000mm, une hauteur sensiblement égale à 250mm et en particulier une longueur sensiblement égale à 2000mm.

5. Récipient de plantation (10) selon l'une quelconque des revendications précédentes, **caractérisé en ce que** le récipient de plantation (10) comprend une rehausse (40), la rehausse (40) étant disposée au moins partiellement au-dessus du bac intérieur (1).

6. Récipient de plantation (10) selon la revendication 4, **caractérisé en ce que** la rehausse (40) présente une base ronde ou carrée.

7. Système de récipient de plantation (20) pour la plantation de balcons, terrasses, jardins ou places consolidées, comprenant au moins deux récipients de plantation (21, 22, 23, 25) selon l'une quelconque des revendications précédentes, dans lequel chaque récipient de plantation (21, 22, 23, 25) comprend un bac intérieur (1) ayant chacun un fond (2a-2d) et au moins quatre parois latérales (31-34), **caractérisé en ce que** toutes les parois latérales (31-34) des bacs intérieurs (1) comprennent des éléments de fixation (4) pour fixer des éléments de cadre (5) du récipient de plantation (21, 22, 23, 25) ou des parois latérales (31-34) d'autres bacs intérieurs (1), une paroi latérale (31-34) d'un premier bac intérieur (1) du premier récipient de plantation (21, 22, 23, 25) étant fixée et/ou étant fixable à une paroi latérale (31-34) d'un deuxième bac intérieur (1) d'un deuxième récipient de plantation (21, 22, 23, 25), un élément de cadre (5) étant respectivement disposé et/ou pouvant être disposé sur toute la longueur ou la largeur du système de récipient de plantation (20), le système de récipients de plantation (20) comprenant en particulier au moins quatre, de préférence six, éléments de cadre (5).

8. Système de récipient de plantation (20) selon la revendication 7, **caractérisé en ce qu'**au moins une première paroi latérale (31-34) du premier bac intérieur (1) et une deuxième paroi latérale (31-34) du deuxième bac intérieur (1) sont reliées et/ou peuvent être reliées à un même élément de cadre (5), cet élément de cadre (5) comprenant en particulier une longueur au moins égale à une première longueur de la première paroi latérale (31-34) et une deuxième longueur de la deuxième paroi latérale (31-34) réunies.
